# EUROPEAN PATENT APPLICATION

(11) **EP 1 737 188 A2**
(43) Date of publication of application: **27.12.2006**
(21) Application number: 06253191.8
(22) Date of filing: 21.06.2006
(51) Int. Cl.: H04L 29/06, H04L 12/28

(54) **Method and apparatus for joining communications sessions to form a communications connection and method of seamless handoff between cellular and wireless packet services**

(30) Priority: 22.06.2005 US 692578 P
(71) Applicant: Newstep Networks, Inc, Toronto, Ontario M5V 1J2 (CA)
(72) Inventor: Raguparan, Masilamany, Dunrobin, Ontario, KOA 1TO (CA); Tom, Frank C., Ottawa, Ontario, K2J 4Y3 (CA)
(74) Representative: Jones, Graham Henry

(57) **Abstract**

A method and system for joining independent but related communications sessions to form a communications connection uses a communications session join function to join independent communications sessions connected to first and second endpoints based on information contained in the respective independent first and second communications session requests. The communications session join function sends connected party information associated with the first endpoint towards the second endpoint and connected party information associated with the second endpoint towards the first endpoint to complete the communications connection.

## Description

### CROSS-REFERENCE TO RELATED APPLICATIONS

This application claims the benefit of applicant's United States Provisional Patent Application No. 60/692,578 filed June 22, 2005.

### MICROFICHE APPENDIX

Not Applicable.

### TECHNICAL FIELD

This application relates in general to the delivery of enhanced communications services and, in particular, to a method and system for a communications session join function to facilitate the provision of the enhanced communications services.

### BACKGROUND OF THE INVENTION

The provision and control of communication services in circuit switched networks such as the Public Switched Telephone Network (PSTN) and mobile networks such as the Public Land Mobile Network (PLMN) are well understood. Likewise, the provision and control of communications services in packet networks using protocols such as Voice over Internet Protocol (VoIP) is becoming well developed. The coexistence of the PSTN/PLMN and the VoIP services has necessitated inter-working functions to permit the completion of communications sessions between those networks. Inter-working functions between the networks include call routing, protocol and media conversion and the termination of calls in one network that were originated in another network. However, seamless handoff of communications sessions from one network to another still requires complex system provisioning. There therefore exists a need for a method and system for seamless inter-network communications session handoff that is readily provisioned using existing network infrastructure.

The increasing availability of Wireless Fidelity (Wi-Fi) and other wireless packet services has captured the interest of wireless users because voice communications available through those services is generally less expensive and is often available in areas not well served by the PLMN. There therefore exists a need for wireless services that permit roaming and communications session handoff between wireless packet and PLMN networks, regardless of whether a communication session is in a setup or connected state.

The joining of call legs is well known in the art and call leg join solutions have been used in many telecommunications applications. For example, multi-party conferencing and cellular communications session handoffs between cellular base stations are well known. A majority of those call leg join solutions use hardware platforms or resources such as digital signal processors (DSPs) to provide signal multiplexing functionality to join the call legs to form a communications connection between connected parties. However, hardware platforms are expensive to implement and do not necessarily provide the desired flexibility at a reasonable cost.

There therefore exists a need for a method and system that provides a communications session join function that can join related but independent communications sessions that originate in the same network or in two different networks, regardless of whether the communications sessions are in a setup or a connected state.

### SUMMARY OF THE INVENTION

It is therefore an object of the invention to provide a method and a system for a communications session join function that can join related but independent communications sessions that traverse the same network or different networks.

The invention therefore provides a method of joining communications sessions to establish a communications connection, comprising: receiving at a communications session join function in an Internet Protocol network first and second independent communications session requests sent on behalf of first and second endpoints; applying application logic to determine a requirement to establish a connection between the first and second endpoints by analyzing information contained in the respective first and second communications session requests; and sending from the communications session join function connected party information associated with the first endpoint toward the second endpoint and connected party information associated with the second endpoint toward the first endpoint to establish the communications connection.

The invention further provides a method of automatic handoff between cellular and wireless packet services on a dual mode mobile device, comprising: determining by an application client operating on the dual mode wireless device that a first call carried by one of a cellular and a wireless packet communications services should be handed off to the other of the cellular and the wireless packet communications services, and sending from the dual mode wireless device a first communications session request to a communications session join function using the other of the cellular and the wireless packet communications services; and automatically disconnecting from the one of the cellular and wireless packet communications services that carries the first call to prompt the communications session join function to send a request to the communications service that carries the first call so that a second communications session request is forwarded from that communications service to the call join function.

The invention further provides a system for joining independent but related communications sessions to form a communications connection, comprising: a communications session join function for joining the independent but related communications sessions connected to first and second endpoints on receiving first and second independent communications session requests sent to the communications session join function on behalf of the first and second endpoints, the communications session join function joining the independent but related communications sessions by sending connected party information associated with the first endpoint toward the second endpoint and sending connected party information associated with the second endpoint toward the first endpoint; and application logic for analyzing information contained in the respective first and second communications session requests received by the communications session join function to determine a requirement for joining the first and second independent communications sessions, and for instructing the communications session join function to join the independent but related communications sessions.

### BRIEF DESCRIPTION OF THE DRAWINGS

Further features and advantages of the present invention will become apparent from the following detailed description, taken in combination with the appended drawings, in which:

FIG. 1 is a schematic diagram showing a high level overview of a communications session join function in accordance with the invention when two incoming communications sessions are joined together to provide a connection between an endpoint #1 and an endpoint #2;

FIG. 2 is a schematic diagram of a hosted VoIP network provisioned with a communications session join function in accordance with the invention embodied in a converged services node (CSN);

FIG. 3 is a schematic diagram of an IP Multi-Media Subsystem (IMS) network provisioned with a communications session join function in accordance with the invention embodied in a CSN;

FIG. 4 is a block diagram of a dual mode handset that can be used to benefit from certain of the services offered by the communications session join function in accordance with the invention;

FIG. 5 is a message flow diagram schematically illustrating principle messages exchanged between selected components of the networks shown in Figs. 2 or 3 for handing-off an existing communications connection from cellular to Wi-Fi;

FIG. 6 is a message flow diagram schematically illustrating principle messages exchanged between selected components of the networks shown in Figs. 2 or 3 in providing a mobile call pickup service using the communications session join function in accordance with the invention, wherein the mobile call pickup transfers a communications session from a cellular connection to a VoIP land line;

FIG. 7 is a message flow diagram schematically illustrating principle messages exchanged between selected components of the networks shown in Figs. 2 or 3 in providing a mobile communications session pickup service using the communications session join function in accordance with the invention, wherein the mobile communications session pickup transfers the communications session from the VoIP land line to a cellular connection; and

FIG. 8 is a message flow diagram schematically illustrating principle messages exchanged between components of the networks shown in Figs. 2 or 3 in providing a mobile communications session re-establishment service using the communications session join function in accordance with the invention.

It should be noted that throughout the appended drawings, like features are identified by like reference numerals.

### DETAILED DESCRIPTION OF THE PREFERRED EMBODIMENT

The invention provides a method and system for joining two incoming communications sessions to form a two-party communications connection using a communications session join function which may be embodied in a converged services node that performs the role of a Session Initiation Protocol (SIP) Application Server. The communications session join function may also be embodied in a Serving Call Session Control Function (S-CSCF); a soft switch; or a Service Capability Interaction Manager (SCIM), for example. The communications session join function enables the provision of many innovative communications services using existing network infrastructure and requires very little network provisioning. The invention has broad application and can be used to significantly enhance the scope of communications service features provided to PSTN/PLMN or VoIP service subscribers.

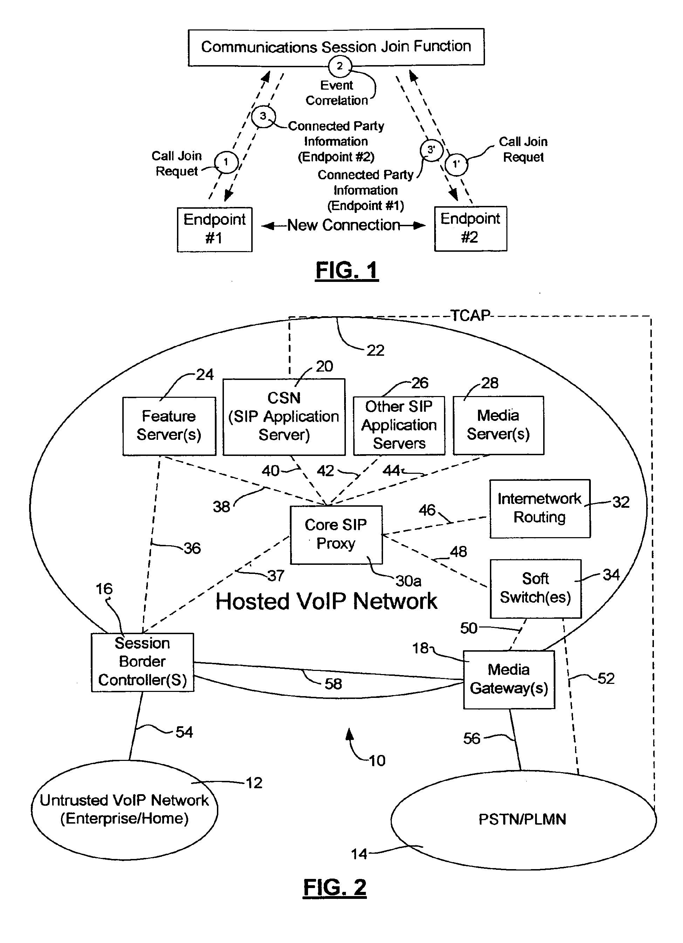

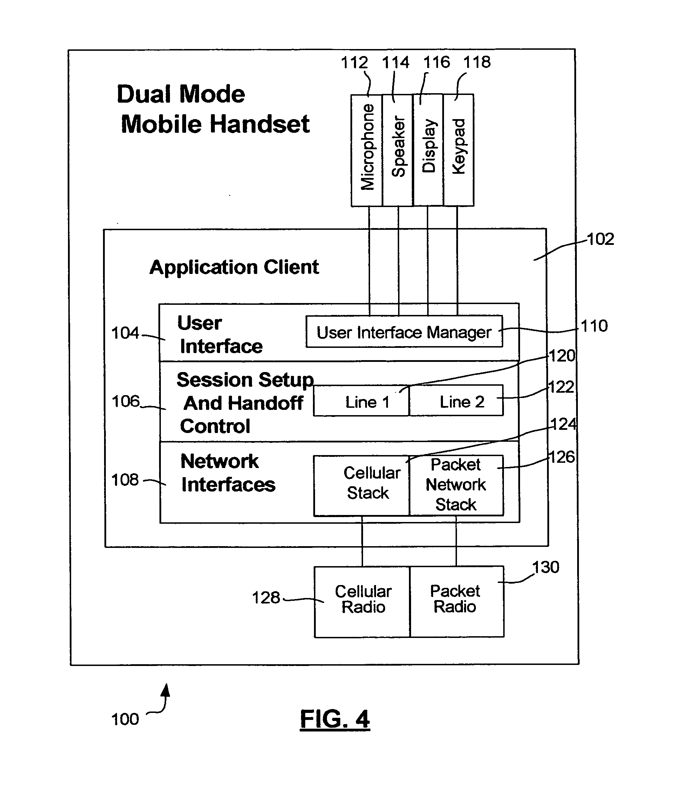

FIG. 1 is a schematic diagram showing a high level overview of the use of the communications session join function in accordance with the invention. Two incoming related but independent communications sessions are joined to provide an established connection between first and second endpoints. As shown in FIG. 1, a first communications session join request is sent on behalf of the endpoint #1 and routed to the communications session join function independently of a communications session join request sent on behalf of the endpoint #2. The first and second communications session join requests 1, 1' are related to an extent that they contain signaling information that is used in conjunction with application logic to perform event correlation 2. The event correlation 2 determines a requirement to join the two incoming communications sessions to form a communications connection. To complete the communications connection, the communications session join function sends corresponding connected party information 3, 3', such as media information in a Session Description Protocol (SDP) back towards the respective endpoints associated with the connected communications sessions, as will be explained below in detail with reference to Figs. 4-7. Upon receiving an indication that the join is completed, the endpoint #1 and the endpoint #2 may start exchanging user data with each other.

FIG. 2 is a schematic diagram of a hosted VoIP network 10 provisioned with a converged services node (CSN) that performs the communications session join function in accordance with the invention. As is well understood by those skilled in the art, hosted VoIP networks are connected to untrusted VoIP networks 12 that serve Enterprise and/or home environments. The hosted VoIP network 10 is also connected to the PSTN/PLMN 14 to permit the offering of transparent communications services originated or terminated in any one of networks 12 and 14. The untrusted VoIP networks 12 are connected to the hosted VoIP network 10 by session border controllers 16, well known in the art. The PSTN/PLMN network 14 is connected to the hosted VoIP network 10 by media gateways 18 and soft switches 34.

The hosted VoIP network 10 is provisioned with the communications session join function embodied in the CSN 20, which acts as a Session Initiation Protocol (SIP) Application Server to provide inter-working functions for specific services between the PSTN/PLMN 14 and the VoIP networks 10, 12. The communications session join function embodied in the CSN 20 functions as a SIP back-to-back User Agent, as will be explained below in more detail.

The hosted VoIP network 10 further includes one or more feature servers 24 which receive incoming communications session requests from the session border controller(s) 16 via communications link(s) 36 in a manner well known in the art. The hosted VoIP network 10 further includes other SIP application servers 26 and media servers 28, both of which are known in the art. Each of the servers are connected to a core SIP Proxy 30a which has global knowledge of the hosted VoIP network 10 and controls intra-network routing. An inter-network routing server 32 provides routing control when calls must be routed to other connected networks 12, 14. Soft switches 34 perform soft switching services within the hosted VoIP network 10. The soft switches 34 are connected by signaling links 52 to PSTN/PLMN network 14 and are IP connected as indicated at 50 to the Media Gateways 18. Communication channel 58 connects the session border controllers 16 and the media gateways 18. Trunks 56 connect the media gateways 18 to the PSTN/PLMN 14. IP connections 38, 40, 42, 44, 46 and 48 respectively connect the feature servers 24, CSN 20, SIP application servers 26, media servers 28, inter-network routing server 32 and soft switches 34 to the core SIP Proxy 30a in a manner well known in the art. IP connections 36 and 37 connect the session border controllers 16 to the feature servers 24 and the core SIP Proxy 30a, likewise in a manner known in the art.

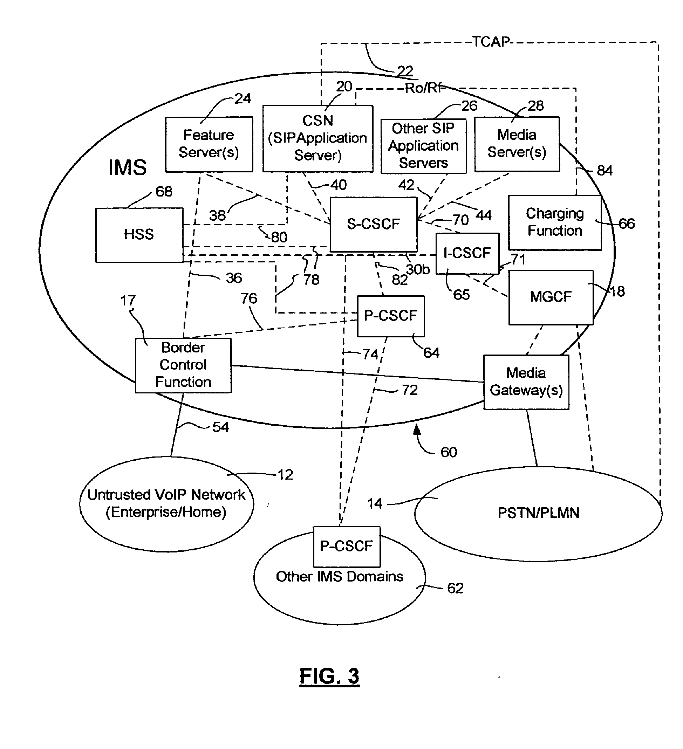

FIG. 3 is a schematic diagram of an IMS network 60 provisioned with the communications session join function in accordance with the invention embodied as the CSN 20. The IMS network 60 is connected by links 54 to: other untrusted VoIP networks 12 by border control functions 17; the PSTN/PLMN 14 by media gateways 18; and, other IMS domains 62 by signaling links 72 and 74. In addition to the components described above with reference to FIG. 3, the IMS 60 includes a session charging function 66 connected to the CSN 20 by signaling link 84 and a home subscriber server (HSS) 68 connected to the CSN 20 by signaling link 80 and to a proxy/service/interrogating call session control function (P-CSF) 64 by a signaling link 78.

A Serving Call Session Control Function (S-CSCF) 30b functions in a way similar to the core SIP Proxy 30a described with reference to FIG. 2, and is connected to the other network components in the same way. The S-CSCF 30b is connected to the border control function(s) 17 by signaling link 76. It is also connected to an Interrogating Call Session Control Function (I-CSCF) 65 by a signaling link 70, which is in turn connected to the media gateway control function (MGCF) 18 by signaling link 71 and to the P-CSCF 64 by a signaling link 82. The S-CSCF 30b is connected to the other IMS domain 62 by signaling link 74. The P-CSCF 64 is connected to the other IMS domains by a signaling link 72. The components, interconnection and operations of all elements of the IMS 60 are well known in the art with the exception of the CSN 20.

It should also be noted that the CSN 20 may be connected to the signaling network of the PSTN/PLMN 14 by any version or variant of Transaction Capabilities Application Part (TCAP) signaling links 22. This permits the CSN 20 to coordinate and control calls originating in the PSTN/PLMN 14, the IMS 60, other IMS domain 62 or untrusted VoIP networks 12 provided that signaling routes provisioned in the respective networks are configured to route signaling messages to the CSN 20 as explained in detail in applicant's co-pending United States Patent Application No. 11/020,225 filed December 27, 2004, the specification of which is incorporated herein by reference.

Certain of the telephone services that may be provided using the communications session join function in accordance with the invention require a mobile handset that is adapted to receive carrier signals propagated in both the cellular and packet networks, and a mobile handset application client that works cooperatively with but independently of the communications session join function. Such mobile handsets are referred to as "dual mode mobile hand sets". FIG. 4 is a block diagram of a dual mode mobile handset 100 provisioned with an application client 102 in accordance with the invention. The application client 102 operates independently of the communications session join function to provide enhanced communications services by sending join requests to the communications session join function. The join requests are sent to the communications session join function in dependence on a service subscribed to and the occurrence of predetermined events, examples of which will be described below.

The application client 102 includes a user interface 104; call set up and handoff control 106; and network interfaces 108. The user interface 104 has a user interface manager 110 connected to a microphone 112; speaker 114; display 116; and keypad 118 which function in a manner well known in the art. The dual mode mobile handset is equipped with two lines, line 1 (120) and line 2 (122) which are used to enable subscriber features such as "call waiting", "3-way conference" and "call hold", all of which are known in the art. The network interfaces 108 includes a cellular stack 124 and a packet network stack 126. The cellular stack 124 includes a set of layered protocols that are used in existing cellular networks. These protocols are used to send information to and receive information form an MSC via a base station using a cellular radio 128. Similarly, the packet network stack 126 includes a set of layered protocols for sending an receiving information via a packet network using a packet radio 130.

### SESSION ROUTING OVERVIEW

The communications session join function in accordance the invention is used provide enhanced communications services. Routing of the related but independent communications sessions through the VoIP network 10 and/or IMS Network 60 described above is therefore dependent upon the communications service and the network from which the service is invoked.

The services offered may be associated with originating subscriber sessions identified by calling party identity, or with terminating subscriber sessions identified by called party identity. Routing to the communications session join function embodied in the CSN 20 can be accomplished in many different ways.

For example, when a subscriber session originates in the PSTN/PLMN 14 and terminates in the VoIP network, the core routing SIP Proxy/S-CSCF 30a, 30b may be provisioned to route all calls from the media gateway 18 to the CSN 20 that match a given range or pattern in a SIP uniform resource identifier (URI) or tel Uniform Resource Locator (URL). The range or pattern may be associated with the calling identity and/or called identity. The CSN 20 forwards those requests with an appropriate R-URI for an endpoint and routes the outbound request to the appropriate SIP Proxy/S-CSCF 30a, 30b. The SIP Proxy/S-CSCF 30a, 30b matches the next filter criteria and forwards the request to an appropriate feature server or IP-PBX 24.

If a call originates in the VoIP network 12 and terminates in the PSTN/PLMN 14, the originating session is routed from a VoIP endpoint to a feature server 24 or an IP-PBX via a session border controller 16 or border control function 17. The feature server 24 or IP-PBX routes the request to the SIP Proxy/S-CSCF 30a, 30b. The SIP Proxy/S-CSCF 30a, 30b forwards all requests that match predefined filter criteria to the CSN 20. The feature server 24 or IP-PBX acts as a registrar/location server for the VoIP endpoints. In addition to standard SIP routing, the SIP Proxy/S-CSCF 30a, 30b also provides routing based on message direction and SIP header matching to a specified range or pattern.

In a different deployment model, the SIP Proxy/S-CSCF 30a, 30b provides the domain registrar and routing functions. The feature servers 24 or IP-PBX may register with the SIP Proxy 30a/S-CSCF 30b on behalf of the VoIP endpoints. Alternatively, the feature servers 24 or the IP-PBX may receive registration requests from the SIP proxy/S-CSCF on behalf of the SIP endpoints. If the feature server 24 or the IP-PBX serves as the registrar, the message flow follows a path: endpoint->SIP Proxy->IP-PBX for SIP registration. In the case of endpoint originated call setup, the message flow follows a path: endpoint->SIP Proxy->CSN->SIP proxy->IP-PBX. In the case of endpoint terminated call setup, the message flow follows a path: Caller->SIP proxy->IP-PBX->SIP Proxy->CSN->SIP Proxy->endpoint.

When IP endpoints register with the hosted VoIP network 10 or the IMS network 60, the domain registrar servers may authenticate each endpoint. Upon successful authentication, the registrar forwards a Register Message to all interested SIP Application Servers 20, 26, a process referred to as third party registration. The CSN 20 interest in third party registration is indicated by provisioning initial filter criteria in the core SIP Proxy 30a in the hosted VoIP network 10 and in the HSS 68 in the IMS network 60. Furthermore, the CSN 20 can obtain all public identities associated with a registered user by subscribing for "REG" event packages, where the S-CSCF 30b notifies the application servers 24 with all implied registrations corresponding to a list of public user identities of the user, as specified by 3GPP architecture specification TS 23.228.

The communications session join function embodied in the CSN 20 also complies with the IMS network 60 Charging Architecture and provides charging information so that independent join requests can be correlated for the purpose of communications service charging after a join of communications sessions associated with the independent join requests is effected. The online/offline charging interface to the Session Charging Function is referred to as a Ro/Rf reference point respectively. Among other elements, the charging information includes an IMS charging correlation identifier received over an ISC interface. In addition, CSN 20 provides a session identifier that is used by a backend billing system to correlate different communications sessions related to a service session.

As explained above, the CSN 20 is provisioned with a communications session join function implemented as a back-to-back User Agent (i.e. UAS-UAC and UAC-UAS) which performs the following functions:

1) Routing back-to-back: when an inbound request is received, the communications session join function processes the request as a User Agent Server (UAS), and suspends processing of a server transaction to notify service logic of the CSN 20. The service logic of the CSN 20 provides instructions to the communications session join function to continue routing and the communications session join function imitates the originating endpoint acting as a User Agent Client (UAC). A selected set of headers, parameters and bodies are propagated from the UAS to the UAC.

2) Joining back-to-back: when an inbound communications session request (e.g., a SIP Invite message) is received at the communications session join function the communications session is suspended and the received event information is passed to the service logic of the CSN 20. When the communications session join function receives the second communications session request and passes the event to the service logic of the CSN 20. The service logic instructs the communications session join function to join the two UAS transactions. The back-to-back user agent joins the two communications sessions by synchronizing a service description protocol (SDP) between the communications sessions by passing connected party information from one endpoint towards the other, and vice versa.

### EXAMPLES

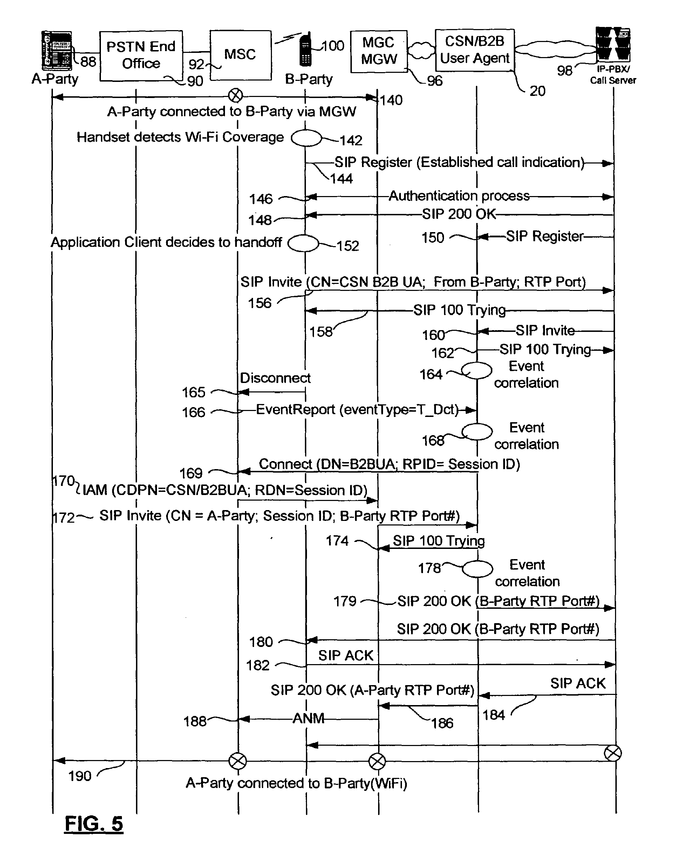

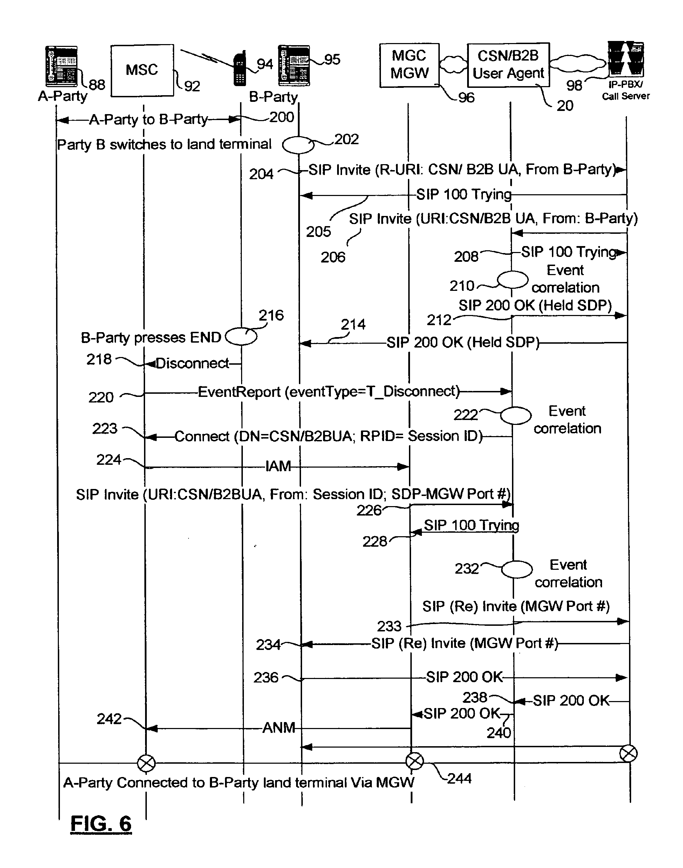

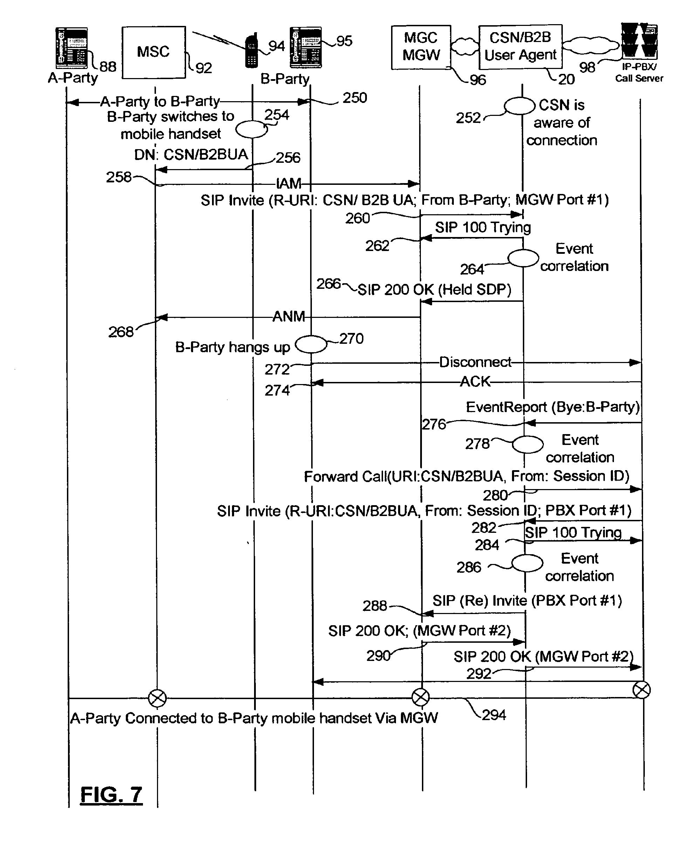

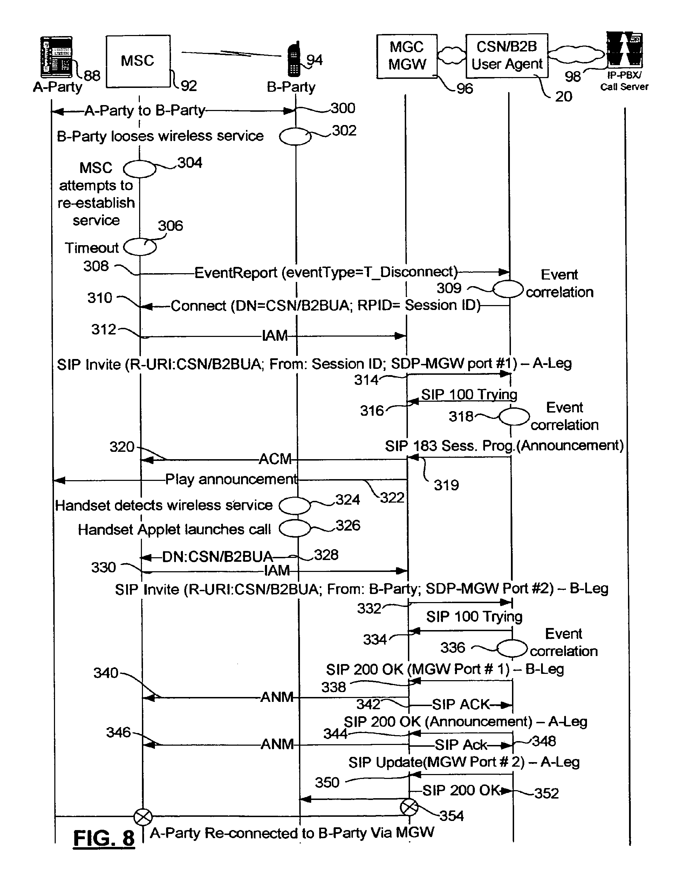

Detailed functioning of the communications session join function and the CSN 20 will now be explained by way of example with reference to message flow diagrams shown in FIGs. 5-8. Although the communications session join function in accordance with the invention can be used to implement a large number of enhanced communications services, for the sake of brevity only three enhanced communications services are described by way of example. FIG. 5 illustrates an enhanced communications service referred to as "Automatic Communications session handoff" in which an in-progress communications session is seamlessly and transparently handed off from one service carrier to another. FIGs. 6 and 7 illustrate an enhanced communications service referred to as a "Call Pickup" service in which an in-progress communications session is seamlessly transferred from one connected communications device to any other compatible communications device. FIG. 8 illustrates an enhanced communications service referred to as "Mobile call recovery" in which a mobile communications session that is interrupted due to loss of carrier is automatically and seamlessly reconnected.

It will be understood by those skilled in the art that the message flow diagrams shown in FIGs. 5-8 do not present a detailed view of all signaling messages required by every signaling protocol. Only those messages essential to provide a complete understanding of the invention are illustrated. Furthermore, although the examples shown below refer explicitly to WiFi they are equally applicable to any packet data service including WiMax, cellular 3^{rd} and 4^{th} generation packet data technologies, etc. Likewise, in the examples that follow any reference to the PSTN applies equally to VoIP, and vice versa.

### Example 1

FIG. 5 illustrates principal network messages exchanged in the provision of a wireless handoff service in which an existing cellular voice call terminated to a dual mode mobile handset 100 is automatically transferred to a Voice over WiFi (VoWiFi) connection. As shown, an individual identified as "A-Party" using a telephone 88 is connected via a PSTN end office 90 and a mobile service center (MSC) 92 to the dual mode mobile handset 100 used by "B-party" (140). During the course of the connection, the dual mode mobile handset 100, detects Wi-Fi coverage (142). The application client 102 on the dual mode mobile handset 100 is programmed to register with the Wi-Fi service provider when the coverage is detected. Consequently, the application client 102 sends a SIP Register message to an IP-PBX or a Call Server 98, hereinafter referred to simply as an IP-PBX 98, with which the WiFi attached mobile handset 100 is associated (144). On receipt of the SIP Register message, an authentication process occurs between the IP-PBX 98 and the application client 102 in a manner known in the art (148,150).

In this example, the authentication is successful and the IP-PBX returns a SIP 200 OK message (148) to the application client 102. Upon completion of the authentication procedure the IP-PBX 98 forwards a SIP Register message (150) to the CSN/B2B User Agent 20. The application client 102 then determines whether a handoff should be effected. The determination can be based on any one or more of a number of rules and/or variables, such as: always handoff when packet service signal strength is adequate; handoff only when cellular signal strength is inadequate; handoff only when a specified service provider network is detected; etc. The determination can also be based on user input, such as user selection of a "soft key" input that requests handoff.

After the application client 102 on mobile handset 100 determines that handoff should be effected (152), the application client 102 sends a communications session request, in this example a SIP Invite message (156) to the IP-PBX 98. The SIP Invite message includes a called number of CSN/B2B User Agent 20 and calling number of B-Party; and RTP port information to be used for the B-Party connection. The IP-PBX 98 returns a SIP 100 Trying message to the mobile handset 100 (158). The IP-PPX 98 then forwards a SIP Invite message to the CSN/B2B User Agent 20 (160) and the CSN/B2B User Agent 20 returns a SIP 100 Trying message (162). The CSN/B2B User Agent 20 then applies application logic to perform an event correlation (164) using the contents of the SIP Invite message received at 160, and determines that it does not yet have a waiting communications session that needs to be joined to the communications session associated with the SIP Invite message, so the CSN/B2B User Agent 20 takes no further action.

Meanwhile, the service client 102 on the mobile handset 100 sends a Disconnect message through the cellular network to the MSC 92, which is a network node in the cellular network. The mobile handset 100 has a Disconnect Trigger (T-Disconnect) enabled on the MSC 92. The Disconnect Trigger is an AIN trigger well known in the art. Consequently, the MSC 92 returns an EventReport to the CSN/B2B User Agent 20 (166). The EventReport has an Event Type of T-Disconnect. It should be understood that as used in this document, "EventReport" and "event report" means any IN/AIN/CAMEL/WIN or CTI indication or communications session diversion technique.

On receipt of the EventReport, the CSN/B2B User Agent 20 applies application logic to perform an event correlation (168) and determines that the connection to A-Party should be maintained because there is a communications session handoff in progress. The CSN/B2B User Agent 20 therefore responds to the MSC 92 with a Connect message (168). The Connect message includes a DN that will direct the call to the communications session join function of the CSN/B2B User Agent 20 and a Redirecting Party Identification equal to the Session ID retrieved from the event correlation at 168.

On receipt of the Connect message, the MSC 92 formulates an ISDN User Part (ISUP) Initial Address Message (IAM) with a called party number equal to a DN for the CSN/B2B User Agent 20, and a redirecting number equal to the Session ID and forwards the IAM through the PLMN 14 to the media gateway 96 (170). On receipt of the IAM, the media gateway 96 formulates a SIP Invite message which identifies the calling number as the A-party, includes the Session ID and identifies the RTP port information to be used by the B-party, i.e. mobile handset 100 (172). The CSN 20 returns a SIP 100 Trying message (174). Because this is a call in progress, the CSN/B2B User Agent 20 does not return a SIP 180 Ringing message, so the media gateway 96 does not return an ISUP Address Complete (ACM) message (176) to the MSC 92. The CSN 20 then formulates a SIP 200 OK message containing the B-Party media gateway RTP port number which is forwarded to the IP-PBX 98 (179). The IP-PBX 98 sends a SIP 200 OK message to the mobile handset 100 (180), which returns a SIP ACK message (182). The IP-PBX 98 returns a SIP ACK message (184) to the CSN 20, which sends a SIP 200 OK message (186) to the media gateway 96 and the media gateway 96 forwards an Answer Message (ANM) to the MSC 92 (188). The A-party is thereby re-connected to the B-party in Wi-Fi mode (190).

### Example 2

FIG. 6 provides a second example of the functioning of the communications session join function embodied in the CSN/B2B User Agent 20. As explained above, FIG. 6 illustrates a Mobile Call Pickup service implemented using the communications session join function in accordance with the invention. In this example, A-Party 88 is connected to B-Party via telephone 88, MSC 92 and a mobile handset 94 (200). The mobile handset 94 may be a single mode or a dual mode mobile handset equipped with both cellular and packet radios. During the course of the call, B-Party decides to switch to a land terminal 95. For example, B-Party enters his office and decides to complete the call using his office telephone 95. In this example, the office telephone 95 is a Voice over Internet Protocol (VoIP) telephone but a PSTN telephone can be used for the same purpose. In order to seamlessly transfer the in-progress call to the land terminal 95, B-Party takes the telephone 95 off hook and presses a speed dial button, or dials a predetermined number to connect to the CSN/B2B User Agent 20. Pressing the speed dial button causes the VoIP telephone 95 to send a communications session request, in this example a SIP Invite message with a R-URI associated with the CSN/B2B User Agent (CSN/B2B UA) 20, and an indication that the invite is from the VoIP telephone 95. In response, the IP-PBX 98 formulates a SIP Invite message which it sends to the CSN/B2B User Agent 20 (206) containing the same information. The CSN/B2B User Agent 20 responds by returning a SIP 100 Trying message (208). The CSN/B2B User Agent 20 then performs event correlation (210), i.e. applies application logic to determine whether the SIP Invite message is associated with a pending join request. In this instance, an associated join request is not found. Consequently, the CSN/B2B User Agent 20 returns a SIP 200 OK message (212) with a held Session Description Protocol (SDP) component to temporarily hold the connection. The IP PBX 98 responds by sending a SIP 200 OK message (214) to the land terminal 95, with a held SDP component.

Meanwhile, B-Party presses the End button on the mobile handset 94 (216). This causes the mobile handset 94 to send a disconnect message (218) to the MSC 92. As explained above, the service subscription of the mobile handset 100 enables a Disconnect Trigger on the MSC 92, which causes the MSC 92 to send an EventReport (220) to the CSN/B2B User Agent 20. On receipt of the EventReport, the CSN/B2B User Agent 20 again performs event correlation (222) and determines that the mobile handset 94 associated with the EventReport message is associated with a subscriber record of the B-Party. Consequently, the CSN/B2B User Agent 20 sends a Connect message to the MSC 92 (223) requesting that the MSC 92 establish a connection to a dialed number associated with the CSN/B2B User Agent 20. The Connect message also contains a Redirecting Party ID equal to a Session ID assigned by the CSN/B2B User Agent 20 at 223.

On receipt of the connect request, the MSC 92 formulates an Initial Address Message (IAM) which it sends to the media gateway 96 (224). On receipt of the IAM, the media gateway 96 formulates a SIP Invite message which it sends to the CSN/B2B User Agent 20 (226). The SIP Invite message has a URI equal to an address of the CSN/B2B User Agent 20 and indicates that the message is from the session ID assigned by the CSN/B2B User Agent 20 at 223. The SIP Invite message further includes a SDP indicating the media gateway port to be used for the connection. On receiving the SIP Invite message the CSN/B2B User Agent 20 returns a SIP 100 Trying message (228), but because there is a call in progress does not return a SIP 180 Ringing message. The media gateway 96 therefore does not return an Address Complete (ACM) message (230) to the MSC 92.

Meanwhile, the CSN/B2B User Agent 20 performs event correlation (232) by applying application logic to determine whether the SIP Invite message contains information that indicates a need to join two independent communications sessions. In this example, the application logic determines that the communications session requests, e.g. the SIP Invites received at 206 and 226 are related by B-Party and the Session ID. The CSN/B2B User Agent 20 therefore formulates a SIP Re-Invite message and sends it to the IP-PBX 98 (233). The SIP Re-Invite message includes the media gateway port number passed to the CSN/B2B User Agent 20 by the media gateway 96 in the SIP Invite message at 226. On receipt of the SIP Re-Invite message the IP-PBX 98 formulates a SIP Re-Invite message including the media gateway port number and sends it (234) to the VoIP telephone 95. The VoIP telephone 95 responds with a SIP 200 OK message (236). The IP-PBX 98 then sends a SIP 200 OK message (238) to the CSN/B2B User Agent 20. The CSN/B2B User Agent 20 then sends a SIP 200 OK message (240) to the media gateway 96. Media gateway 96 responds by sending an ISUP Answer (ANM) to the MSC 92 (242). The A-Party is now connected to the B-party land terminal via the MSC 92 and the media gateway 96 (244).

### Example 3

FIG. 7 illustrates another example of the Mobile Call Pickup service described above with reference to FIG. 6. In this example, B-Party transfers an active communications session from a land line telephone 95 to the mobile handset 94. The land line telephone 95 is an IP telephone connected through the IP-PBX 98. However, the land line telephone 95 could also be a PSTN-connected telephone.

As shown at 250, A-Party using a PSTN-connected telephone 88 is connected to B-Party who is using the IP telephone 95. The CSN/B2B User Agent 20 is made aware of this connection (252). Its awareness of the connection can come from a plurality of sources and is provided to the CSN/B2B User Agent 20 as a result of B-Party's subscription to the Mobile Call Pickup service.

B-Party decides to switch the communications session in progress to the mobile handset 94 (254). In order to perform the switch, B-Party selects a speed dial button on the mobile handset 94 to launch a wireless communications session to the CSN/B2B User Agent 20 (256). On receipt to the dialed digits, the MSC 92 formulates an IAM which it forwards to the media gateway 96 (258). The media gateway 96 responds by formulating a SIP Invite message which it sends to the CSN/B2B User Agent 20 (260). The CSN/B2B User Agent 20 responds with a SIP 100 Trying message (262). The CSN/B2B User Agent then performs event correlation (264) by applying application logic to the contents of the SIP Invite message in order to determine whether there is a corresponding communications session that needs to be joined to the incoming communications session. The CSN/B2B User Agent 20 determines that no corresponding communications session exists. It therefore returns a SIP 200 OK message with a held SDP (266). On receipt of the SIP 200 OK message, the media gateway 96 returns an ANM message to the MSC 92 (268).

Meanwhile, B-Party hangs (270) up the SIP telephone 95, which prompts the SIP telephone 95 to send a Disconnect message to the IP-PBX 98 (272). The IP-PBX 98 responds with an ACK message (274). The IP-PBX 98 is programmed to report disconnects of subscribers to Mobile Call Pickup service to the CSN/B2B User Agent 20, and sends an EventReport to the CSN/B2B User Agent 20 indicating that it has received a Disconnect from the IP telephone 95 (276). On receipt to the EventReport, the CSN/B2B User Agent 20 applies application logic to perform event correlation (278) and determines that B-Party is a Mobile Call Pickup service subscriber, and that a pickup request was already received at 260. Consequently, the CSN/B2B User Agent 20 formulates a Forward communications session request instructing the IP-PBX 98 to forward the A-Party connection to the CSN/B2B User Agent 20 (280). The Forward communications session request includes a URI of the CSN/B2B User Agent 20 and a From indication equal to a Session ID assigned by the CSN/B2B User Agent 20 (280).

On receipt of the Forward communications session instruction, the IP-PBX 98 formulates the SIP Invite message which it sends to the CSN/B2B User Agent 20 (282). The SIP Invite message includes the R-URI of the CSN/B2B User Agent 20, a From indication equal to the Session ID, and a SDP including the PBX port number of the A-Party connection. The CSN/B2B User Agent 20 responds with a SIP 100 Trying message (284). The CSN/B2B User Agent 20 then applies application logic to perform event correlation (286) using the information received in the SIP Invite message at 282, and determines that it has two communications sessions that need to be joined. Consequently, the CSN/B2B User Agent 20 formulates a SIP Re-Invite message with a SDP specifying PBX Port #1 and forwards the SIP Re-Invite message to the media gateway 96 (288). The media gateway 96 responds with the SIP 200 OK message containing a SDP specifying media gateway Port #2. The CSN/B2B User Agent formulates a SIP 200 OK message that it sends to the IP-PBX 98 with a SDP specifying the media gateway Port #2 (292). Thereafter, A-Party is connected to B-Party's mobile handset via the MSC 92 and media gateway 96 (294).

### Example 4

FIG. 8 illustrates principal signaling messages exchanged during the provision of a Mobile call recovery service using the communications session join function in accordance the invention. In this example, B-Party using mobile handset 94 is connected via cellular radio to A-Party (300) who is using telephone 88, which may be a PSTN/PLMN or a VoIP land line or radio telephone. This service also works in essentially the same way if B-Party is using a VoWiFi telephone service.

When B-Party roams outside an area served by the PLMN, B-Party loses cellular service (302). As is well understood by those skilled in the art, when a base station loses contact with a cellular telephone engaged in an active communication session, the MSC 92 attempts to re-establish service (304). After a predetermined time, the MSC will declare timeout (306) and cancel the session. As described above, B-Party's cellular subscription enables a Disconnect Trigger that forces the MSC 92 to send an EventReport message with an Event Type equal to T-Disconnect (308) to the CSN/B2B User Agent 20 when the MSC 92 cancels the communication session.

The CSN/B2B User Agent 20 performs event correlation (309) by applying application logic to analyze the EventReport, and determines that B-party is a subscriber to the Mobile call recovery service. The CSN/B2B User Agent 20 is programmed to maintain the connection to any connected party when a T-Disconnect EventReport message is received. Consequently, the CSN/B2B User Agent 20 formulates a Connect message (310) and sends it to the sender of the EventReport, in this example, the MSC 92. The Connect message includes a dial number used to reach the CSN/B2B User Agent 20 from the PSTN, and a Redirecting Party ID equal to a Session ID assigned by the CSN/B2B User Agent 20. On receipt of the Connect message, the MSC 92 formulates an ISUP Initial Address Message (IAM) and forwards it (312) to the media gateway 96. When the media gateway 96 receives the IAM message, it formulates a communications session request, in this example a SIP Invite message (314) which it sends to the CSN/B2B User Agent 20. The SIP Invite message includes a URI equal to an address of the CSN/B2B User Agent 20 and indicates that the SIP Invite is from the Session ID assigned by the CSN/B2B User Agent 20 at 310. The SIP Invite message further includes a SDP specifying a media gateway Port #1. For the sake of clarity in the description that follows, the SIP Invite message is identified as being associated with A-Leg of a communications connection to be established.

The CSN/B2B User Agent 20 responds with a SIP 100 Trying message (316). Thereafter, the CSN/B2B User Agent 20 performs event correlation (318) by applying application logic to determine the noted relation between the Connect message sent at 310 and the SIP Invite sent at 134, i.e. the Session ID. The CSN/B2B User Agent 20 therefore formulates a SIP 183 Session Progress message (319) containing information that will permit the media gateway 96 to play an announcement to the A-Party. That information may be, for example, an IP address of an announcement server; a port number of the announcement server; and, a codec type of the announcement content. As is well understood by those skilled in the art, additional signaling between the CSN and the media gateway 96 is required to pass the announcement server RTP information. On receipt of the SIP 183 Session Progress message (319), the media gateway 96 returns an Address Complete (ACM) to the MSC 92 (320). Then using the announcement server information, the media gateway 96 plays an announcement (322) to A-Party requesting that A-Party stay on the line while an attempt is made to re-establish the service connection to B-Party.

Meanwhile, the mobile handset 94 enters, or reenters, a wireless service area and detects the wireless service (324). An applet that is active on the mobile handset 94 is programmed to launch a communications session request to the CSN/B2B User Agent 20 (326) whenever service is detected after an active communications session has been interrupted. The communications session request launch may be governed a predetermined timeout, and may not be performed if a predetermined time has elapsed since the call was interrupted. In this example, the wireless service is detected before the timeout, and the communications session request is automatically launched by the mobile handset applet by sending dialed digits for launching a call to the CSN/B2B User Agent 20 from the PSTN (328). On receipt of the dialed digits, the MSC 92 formulates an ISUP Initial Address Message (IAM) and forwards it (330) towards the media gateway 96, as dictated by translation of the dialed digits.

On receipt of the IAM, the media gateway 96 formulates a SIP Invite message and sends it to the CSN/B2B User Agent 20 (332). The SIP Invite message includes a R-URI of the CSN/B2B User Agent 20; a From indication equal to the DN of the B-Party; and a SDP indicating the media gateway port number associated with the communications session, i.e. Port #2. For clarity, the SIP Invite message is labeled "B-Leg", indicating the second independent communications session join request received by the CSN/B2B User Agent 20. The CSN/B2B User Agent 20 responds to receipt of the SIP Invite message by returning a SIP 100 Trying message (334). The CSN/B2B User Agent 20 then performs event correlation (336) by applying application logic to determine whether the SIP invite is associated with any other communications session join request that it has recently received. The application logic discovers an association between the SIP Invite message received at 314 and the SIP Invite message received at 332.

Consequently, the CSN/B2B User Agent 20 returns a SIP OK message that points to Port #1 of the media gateway 96 (338) to join B-Leg to A-Leg. On receipt of the SIP 200 OK message the media gateway 96 formulates an ISUP Answer (ANM) message which it sends to the MSC 92 (340) and then their returns a SIP ACK message (342) to the CSN/B2B User Agent 20. The CSN/B2B User Agent 20 then sends a SIP 200 OK message containing the announcement information to the media gateway 96 (344). On receipt of the SIP 200 OK message, the media gateway 96 formulates another ANM message (346) and sends it to the MSC 92. The media gateway 96 then returns a SIP ACK message (348) to the CSN/B2B User Agent 20. The CSN/B2B User Agent 20 responds by sending a SIP Update message to the media gateway 96 indicating that media gateway is to use the median gateway port (Port # 2) sent to the CSN/B2B User Agent 20 at 332 to join A Leg to B Leg. The media gateway 96 returns a SIP 200 OK (352), and thereafter A-Party is re-connected to B-Party via the MSC 92 and the media gateway 96. This service therefore automatically re-connects an interrupted wireless communications session without effort by either party.

The communications session join function embodied in the CSN as a back-to-back User Agent in accordance with the invention therefore provides a versatile tool in the switched packet network. The communications session join function can be used to provide a plurality of different communications services in a variety of ways. The examples presented above are neither comprehensive nor exhaustive.

The scope of the invention is therefore intended to be limited solely by the scope of the appended claims.

## Claims

1. A method of joining communications sessions to establish a communications connection, comprising:
receiving at a communications session join function in an Internet Protocol network first and second independent communications session requests sent on behalf of first and second endpoints;
applying application logic to determine a requirement to establish a connection between the first and second endpoints by analyzing information contained in the respective first and second communications session requests; and
sending from the communications session join function connected party information associated with the first endpoint toward the second endpoint and connected party information associated with the second endpoint toward the first endpoint to establish.the communications connection.

2. The method as claimed in claim 1 further comprising suspending a first communications session with the first endpoint when the first communications session request is received at the communications session join function.

3. The method as claimed in claim 2 further comprising extracting information from the first communications session request and passing the information to the application logic.

4. The method as claimed in claim 3 wherein receiving the second independent communications session request further comprises passing information extracted from the second independent communications session request to the service logic.

5. The method as claimed in claim 5 further comprising receiving instructions from a converged services node that executes the application logic to join two SIP UAS transactions associated with the first and second communications session requests.

6. The method as claimed in claim 6 wherein sending the connected party information comprises sending a representative Session Description Protocol (SDP) of the first endpoint towards the second endpoint, and vice versa.

7. The method as claimed in claim 1 wherein prior to receiving the first and second communications session requests the method comprises receiving a notification indicating that a service subscriber has a predetermined communications service available.

8. The method as claimed in claim 1 wherein prior to receiving the second communications session request, the method further comprises:
receiving an event report at a converged services node embodying the communications session join function, the event report having been sent from a network node of a provider of a first communications service reporting that a subscriber has disconnected from the first communications service;
applying application logic to determine what action should be taken in response to receipt of the event report; and
sending a connect request from the converged services node to the network node to initiate a connection between the communications session join function and a party that was connected to the subscriber.

9. The method as claimed in claim 9 further comprising:
receiving the second communications session request at the communications session join function in response to sending the connect request.

10. The method as claimed in claim 1 wherein receiving the independent communications session requests comprises receiving the independent communications session requests from a subscriber of one of: a mobile communications session handoff service; a call pickup service; and a mobile call recovery service.

11. A method of seamless handoff between cellular and wireless packet services on a dual mode mobile device, comprising:
determining by an application client operating on the dual mode wireless device that a first communications session carried by one of a cellular and a wireless packet communications services should be handed off to the other of the cellular and the wireless packet communications services, and sending from the dual mode wireless device a first communications session request to a call join function using the other of the cellular and the wireless packet communications services; and
automatically disconnecting from the one of the cellular and wireless packet communications services that carries the first call to prompt a service node embodying the call join function to send a connect request to the communications service that carries the first call so that a second communications session request is forwarded from that communications service to the call join function.

12. The method as claimed in claim 11 wherein prompting the service node comprises sending an event report to the service node when the disconnecting by the dual mode wireless device is detected by the one of the cellular and wireless packet communications services that carries the first call.

13. The method as claimed in claim 11 wherein determining to handoff the first communications session comprises an input received from a user interface of the dual mode wireless device directing the handoff from the one of the cellular and the wireless packet communications services to the other of the cellular and the wireless packet communications services.

14. The method as claimed in claim 11 wherein the determining to handoff the first communications session comprises a determination based on at least one rule and at least one variable value.

15. The method as claimed in claim 11 wherein the determining to handoff the first communications session comprises a rule that dictates that one of the services is to be used whenever a signal of a predetermined signal strength is available for that service.

16. A system for joining independent but related communications sessions to form a communications connection, comprising:
a communications session join function for joining the independent but related communications sessions connected to first and second endpoints on receiving first and second independent communications session requests sent to the communications session join function on behalf of the first and second endpoints, the communications session join joining the independent but related communications sessions by sending connected party information associated with the first endpoint toward the second endpoint and sending connected party information associated with the second endpoint toward the first endpoint; and
application logic for analyzing information contained in the respective first and second communications session requests received by the communications session join function to determine a requirement for joining the first and second independent communications sessions, and for instructing the communications session join function to join the independent but related communications sessions.

17. The system as claimed in claim 16 wherein the communications session join function is embodied in a converged services node, which functions as one of:
an application server in a data packet network; a Serving Call Session Control Function (S-CSCF); a soft switch; or a Service Capability Interaction Manager (SCIM).

18. The system as claimed in claim 17 wherein the packet data network is one of a Soft Switched voice over Internet Protocol (VoIP) and an Internet Protocol Multi-Media Subsystem (IMS) network.

19. The system as claimed in claim 16 wherein the communications session join function comprises a SIP back-to-back user agent.

20. The system as claimed in claim 19 wherein the back-to-back user agent comprises two User Agent Servers coupled through the service logic to establish an end-to-end communication connection.
